# EUROPÄISCHE PATENTSCHRIFT

(11) **EP 0 403 738 B1**
(45) Veröffentlichungstag und Bekanntmachung des Hinweises auf die Patenterteilung: **30.03.1994**
(21) Anmeldenummer: 90105528.5
(22) Anmeldetag: 23.03.1990
(51) Int. Cl.: B60J 7/02

(54) **Gleitbacke für Schiebedächer, Schiebehebedächer und dergleichen**
Guide shoe for sliding roofs, sliding-tilting roofs or the like
Bloc coulissant pour toits ouvrants, toits ouvrants relevables ou de telles choses

(30) Priorität: 22.06.1989 DE 3920372
(43) Veröffentlichungstag der Anmeldung: 27.12.1990
(73) Patentinhaber: Webasto AG Fahrzeugtechnik, D-82131 Stockdorf (DE)
(72) Erfinder: Bienert, Horst, D-8035 Gauting (DE); Bauer, Max, D-8913 Schondorf (DE)

(56) Entgegenhaltungen:
- DE-A- 1 630 330
- DE-A- 3 425 273
- DE-C- 2 553 549

## Beschreibung

Die Erfindung bezieht sich auf eine Gleitbacke für Schiebedächer, Schiebehebedächer und dergleichen, mit einem Gleitbackenkörper aus Gummi, der auf einen Gleitbackenträger aufsteckbar und im montierten Zustand in einer im Querschnitt im wesentlichen U-förmigen Längsführung verschiebbar geführt ist.

Bei einer bekannten Gleitbacke dieser Art (DE-C-25 53 549) ist der Gleitbackenkörper an drei Seiten im Bereich seiner Gleitflächen mit einer reibungsmindernden Auflage in Form einer aufkaschierten Folie aus gleitfähigem PTEE oder einer Beschichtung oder Beflockung aus einem reibungsarmen Material, wie Polyamid, versehen. Gummigleitbacken mit aufkaschierter PTEE-Folie sind jedoch schwierig herzustellen und daher kostspielig. Gummigleitbacken mit einer Beschichtung oder Beflockung aus reibungsarmem Material haben relativ rauhe Gleitflächen, und sie müssen in unerwünschter Weise gefettet werden. Gleichwohl sind insbesondere bei höheren Temperaturen (60° C und mehr) und bei Querbeschleunigungen (Kurvenfahrt) Knarzgeräusche nicht auszuschließen.

Es sind ferner Kunststoffgleitbacken bekannt (DE-A-16 30 330), in die zum Toleranzausgleich eine vorgespannte Stahlfeder eingelegt ist. Solche Gleitbacken haben in der Praxis den Nachteil, daß sich die Stahlfeder nach längerem Einsatz setzt und dann Klappergeräusche auftreten können.

Der im Patentanspruch 1 angegebenen Erfindung liegt die Aufgabe zugrunde, eine Gleitbacke zu schaffen, die besonders kostengünstig hergestellt werden kann, die unter den in Kraftfahrzeugen auftretenden rauhen Bedingungen auch im Langzeiteinsatz und bei höheren Temperaturen störende Geräusche sicher vermeidet und die keiner Fettung bedarf.

Diese Aufgabe wird bei einer Gleitbacke der eingangs genannten Art erfindungsgemäß dadurch gelöst, daß auf den aus Weichgummi gefertigten Gleitbackenkörper eine Gleitkappe aus Kunststoff aufgesetzt ist.

Die Gleitbacke nach der Erfindung kommt ohne eine zusätzliche Feder aus. Der Gleitbackenkörper aus Weichgummi dient selbst als Federelement, das für den notwendigen Toleranzausgleich und für die gewünschten Dämpfungseigenschaften sorgt. Durch die aufgesetzte Kunststoffgleitkappe lassen sich zugleich glatte Gleitflächen und hervorragende Gleiteigenschaften erzielen, ohne daß die Gleitbacke gefettet zu werden braucht und unabhängig davon, ob die Längsführung aus Metall oder Kunststoff besteht. Der Gleitbackenkörper und die Gleitkappe sind als Einzelteile sehr einfach und kostengünstig herzustellen

Bevorzugte weitere Ausgestaltungen der Erfindung ergeben sich aus den Unteransprüchen.

Ein Ausführungsbeispiel der Erfindung wird im folgenden unter Bezugnahme auf die Zeichnungen beschrieben. Es zeigt:
- Fig. 1: eine Seitenansicht einer Gleitbacke, die in einer U-förmigen Führungsschiene angeordnet ist,
- Fig. 2: die Draufsicht der Gleitbacke von Fig. 1,
- Fig. 3: den Schnitt entlang der Linie III-III in Fig. 1,
- Fig. 4: die Seitenansicht der Gleitbacke in Richtung des Pfeils in Fig. 2 und
- Fig. 5: eine Seitenansicht entsprechend Fig. 4 für eine abgewandelte Ausführungsform.

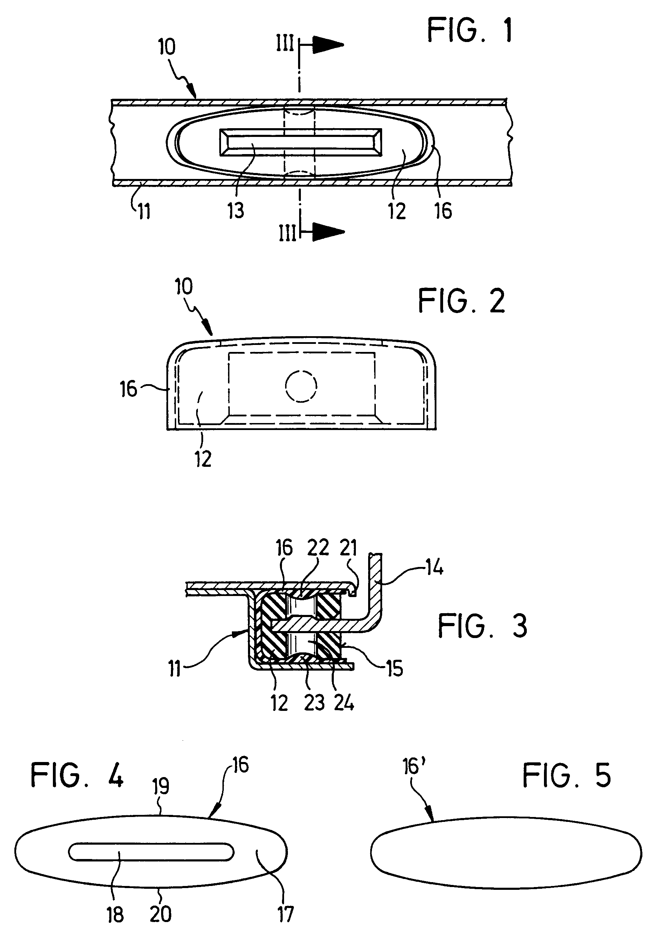

Eine insgesamt mit 10 bezeichnete Gleitbacke ist in einer im Querschnitt U-förmigen Gleitschiene 11 längsverschiebbar geführt. Die Gleitbacke 10 weist einen Gleitbackenkörper 12 aus Gummi auf. In dem zentralen Teil des Gleitbackenkörpers 12 ist eine Längsnut 13 ausgebildet. Der Gleitbackenkörper 12 ist auf einen Gleitbacken 14 aufgesteckt, der dabei von der Aufsteckseite 15 des Gleitbackenkörpers aus in die Längsnut 13 eingreift (Fig. 3). Der Gleitbackenträger 14 kann in nicht näher veranschaulichter Weise mit einem verstellbaren Teil eines Schiebedaches, Schiebehebedaches oder dergleichen verbunden sein. Der Gleitbackenkörper 12 ist aus Weichgummi, vorzugsweise einem Polychloropren-Kautschuk, mit einer Shore-A-Härte von 30 bis 50, vorzugsweise etwa 40, gefertigt.

Auf den Gleitbackenkörper 12 ist eine Gleitkappe 16 aus Kunststoff aufgesetzt, welche den Gleitbackenkörper 14 bis auf die Aufsteckseite 15 umhüllt. Bei geringen Führungsbahntoleranzen kann eine Gleitkappe 16' vorgesehen sein, die bis auf die Aufsteckseite allseitig geschlossen ist (Fig. 5). Größere Führungsbahntoleranzen lassen sich ausgleichen, wenn entsprechend der bevorzugten Ausführungsform (Fign. 3 und 4) die Gleitkappe 16 auf der der Aufsteckseite 15 gegenüberliegenden Stirnseite 17 geschlitzt ist. Dabei ist vorzugsweise in der Stirnseite 17 ein Längsschlitz 18 ausgebildet, der sich über den größeren Teil der Längsabmessung der Gleitkappe 16 erstreckt und der von den beiden Längsseiten 19 und 20 der Gleitkappe mindestens näherungsweise gleichen Abstand hat. Im einen wie im anderen Falle sind der Gleitbackenkörper 12 und die Gleitkappe 16 bzw. 16' in der Seitenansicht zweckmäßig pontonförmig ausgebildet, wie dies in den Fign. 1, 4 und 5 dargestellt ist. Die Gleitkappe 16 ragt auf der Aufsteckseite 15 in Querrichtung um ein kleines Stück über den Gleitbackenkörper 12 hinaus. Dadurch wird sichergestellt, daß sich nur die Gleitkappe 16, nicht aber der Gleitbackenkörper 12 gegen eine Führungsleiste 21 der Gleitschiene 11 anlegen kann, welche die Gleitbacke 10 gegen ein seitliches Herausrutschen aus der Gleitschiene 11 sichert.

Die Gleitkappe 16 trägt an der Innenfläche beider Längsseiten 19 und 20 jeweils eine Rastnocke 22 bzw. 23. Der Gleitbackenkörper 12 ist mit einer durchgehenden Rastöffnung 24 versehen. Beim Aufschieben der Gleitkappe 16 auf den Gleitbackenkörper 12 legen sich die einander gegenüberliegenden Rastnocken 22 und 23 in die entgegengesetzten Enden der Rastöffnung 24 ein. Dadurch werden der Gleitbackenkörper 12 und die Gleitkappe 16 zusammengehalten.

Die Gleitkappe 16 bzw. 16' ist aus einem Kunststoff mit guten Gleiteigenschaften gefertigt, der härter als der Werkstoff des Gleitbackenkörpers 12 ist. Besonders geeignet zur Herstellung der Gleitkappe 16 bzw. 16' sind ein Polyethylen hoher Dichte (HDPE), ein isotaktisches oder elastomermodifiziertes Polypropylen, ein Acetalcopolymerisat auf der Basis von Trioxan oder ein Polyoxymethylen mit Polytetrafluorethylenzusatz. Die Gleitkappe 16, 16' hat zweckmäßig eine Shore-A-Härte im Bereich von 60 bis 80. Als besonders günstig erwies sich eine Shore-A-Härte von etwa 70. Um Geräusche zwischen dem Gleitbackenkörper 12 und dem Gleitbackenträger 14 auszuschließen, wird der Gleitbackenkörper 12 vor der Montage zweckmäßig mit Talkum oder dergleichen eingepudert.

Die erläuterte Gleitbacke läßt sich auf besonders einfache Weise fertigen. Es werden hervorragende Gleiteigenschaften erzielt, ohne daß es einer Fettung bedarf. Aufgrund der Elastizität des Gleitbackenkörpers 12 und der Gleitkappe 16, 16' werden Toleranzen wirksam ausgeglichen. Klappergeräusche und dergleichen stellen sich auch im Langzeiteinsatz der Gleitbacke nicht ein. Durch Spiel zwisehen dem Gleitbackenkörper 12 und der Gleitkappe 16 bzw. 16' an den Längsseiten können die für die verwendeten Werkstoffe erforderlichen Toleranzen problemlos ausgeglichen werden.

## Patentansprüche

1. Gleitbacke für Schiebedächer, Schiebehebedächer und dergleichen, mit einem Gleitbackenkörper (12) aus Gummi, der auf einen Gleitbackenträger (14) aufsteckbar und im montierten Zustand in einer im Querschnitt im wesentlichen U-förmigen Längsführung verschiebbar geführt ist, **dadurch gekennzeichnet**, daß auf den aus Weichgummi gefertigten Gleitbackenkörper (12) eine Gleitkappe (16, 16') aus Kunststoff aufgesetzt ist.

2. Gleitbacke nach Anspruch 1, dadurch gekennzeichnet, daß die Gleitkappe (16, 16') den Gleitbackenkörper (12) bis auf die Aufsteckseite (15) umhüllt.

3. Gleitbacke nach Anspruch 1 oder 2, dadurch gekennzeichnet, daß die Gleitkappe (16') bis auf die Aufsteckseite (15) allseitig geschlossen ist.

4. Gleitbacke nach Anspruch 1 oder 2, dadurch gekennzeichnet, daß die Gleitkappe (16) auf der der Aufsteckseite (15) gegenüberliegenden Stirnseite (17) geschlitzt ist.

5. Gleitbacke nach Anspruch 4, dadurch gekennzeichnet, daß der Schlitz als Längsschlitz (18) ausgebildet ist, der sich über den größeren Teil der Längsabmessung der Gleitkappe (16) erstreckt.

6. Gleitbacke nach Anspruch 5, dadurch gekennzeichnet, daß der Längsschlitz (18) von den beiden Längsseiten (19, 20) der Gleitkappe (16) mindestens näherungsweise gleichen Abstand hat.

7. Gleitbacke nach einem der vorhergehenden Ansprüche, dadurch gekennzeichnet, daß der Gleitbackenkörper (12) und die Gleitkappe (16, 16') in der Seitenansicht pontonförmig ausgebildet sind.

8. Gleitbacke nach einem der vorhergehenden Ansprüche, dadurch gekennzeichnet, daß die Gleitkappe (16, 16') auf der Aufsteckseite (15) um ein vorbestimmtes Maß über den Gleitbackenkörper (12) hinausragt.

9. Gleitbacke nach einem der vorhergehenden Ansprüche, dadurch gekennzeichnet, daß die Gleitkappe (16, 16') an der Innenfläche mindestens einer der beiden Längsseiten (19, 20) mindestens eine nach innen vorspringende Rastnocke (22, 23) trägt' die sich in eine zugeordnete Rastöffnung (24) des Gleitbackenkörpers (12) einlegt.

10. Gleitbacke nach Anspruch 9, dadurch gekennzeichnet, daß die Gleitkappe (16, 16') an der Innenfläche beider Längsseiten (19, 20) jeweils eine Rastnocke (22, 23) trägt und der Gleitbackenkörper (12) mit einer durchgehenden Rastöffnung (24) zur Aufnahme der beiden einander gegenüberliegenden Rastnocken versehen ist.

11. Gleitbacke nach einem der vorhergehenden Ansprüche, dadurch gekennzeichnet, daß der Gleitbackenkörper (12) eine Shore-A-Härte von 30 bis 50, vorzugsweise etwa 40, hat.

12. Gleitbacke nach einem der vorhergehenden Ansprüche, dadurch gekennzeichnet, daß die Gleitkappe (16, 16') eine Shore-A-Härte von 60 bis 80, vorzugsweise etwa 70, hat.

13. Gleitbacke nach einem der vorhergehenden Ansprüche, dadurch gekennzeichnet, daß der Gleitbackenkörper (12) aus Polychloropren-Kautschuk gefertigt ist.

14. Gleitbacke nach einem der vorhergehenden Ansprüche, dadurch gekennzeichnet, daß die Gleitkappe (16, 16') aus einem Polyethylen hoher Dichte (HDPE), einem isotaktischen oder elastomermodifizierten Polypropylen, einem Acetalcopolymerisat auf der Basis von Trioxan oder aus Polyoxymethylen mit Polytetrafluorethylenzusatz gefertigt ist.

15. Gleitbacke nach einem der vorhergehenden Ansprüche, dadurch gekennzeichnet, daß der Gleitbackenkörper (12) mit Talkum oder dergleichen eingepudert ist.

## Claims

1. Slide shoe for sliding roofs, sliding-tilting roofs and the like, with a slide shoe body (12) made from rubber which can be mounted onto a slide shoe carrier (14) and which, in the assembled state, is guided for displacement in a cross-sectionally substantially U-shaped longitudinal guideway, characterised in that a slide casing (16, 16') of synthetic plastics material is placed over the slide shoe body (12) which is made from soft rubber.

2. Slide shoe according to Claim 1, characterised in that the slide casing (16, 16') encloses the slide shoe body (12) except for the mounting side (15).

3. Slide shoe according to Claim 1 or 2, characterised in that the slide casing (16') is closed on all sides except for the mounting side (15).

4. Slide shoe according to Claim 1 or 2, characterised in that the slide casing (16) is slotted on the end face (17) opposite the mounting side (15).

5. Slide shoe according to Claim 1 or 2, characterised in that the slot is formed as a longitudinal slot (18) which extends over the major part of the length of the slide casing (16).

6. Slide shoe according to Claim 5, characterised in that the longitudinal slot (18) is at least approximately equidistant from both longitudinal sides (19, 20) of the slide casing (16).

7. Slide shoe according to one of the preceding Claims, characterised in that the slide shoe body (12) and the slide casing (16, 16') are pontoon-shaped in side elevation.

8. Slide shoe according to one of the preceding Claims, characterised in that on the mounting side (15), the slide casing (16, 16') projects by a certain amount beyond the slide shoe body (12).

9. Slide shoe according to one of the preceding Claims, characterised in that the slide casing (16, 16') has on the inside surface of at least one of the two longitudinal sides (19, 20) at least one inwardly projecting latching bulge (22, 23) which fits into an associated latching aperture (24) in the slide shoe body (12).

10. Slide shoe according to Claim 9, characterised in that the slide casing (16, 16') has on the inside face of both longitudinal sides (19, 20) a respective latching bulge (22, 23) and in that the slide shoe body (12) is provided with a continuous latching aperture (24) to accommodate the two oppositely disposed latching bulges.

11. Slide shoe according to one of the preceding Claims, characterised in that the slide shoe body (12) has a Shore-A hardness of 30 to 50 and preferably about 40.

12. Slide shoe according to one of the preceding Claims, characterised in that the slide casing (16, 16') has a Shore-A hardness of 60 to 80 and preferably about 70.

13. Slide shoe according to one of the preceding Claims, characterised in that the slide shoe body (12) is made from polychloroprene rubber.

14. Slide shoe according to one of the preceding Claims, characterised in that the slide casing (16, 16') is made from a polyethylene of high density (HDPE), an isotactic or elastomer modified polypropylene, an acetal copolymer based on trioxane or from polyoxymethylene with added polytetrafluoroethylene.

15. Slide shoe according to one of the preceding Claims, characterised in that the slide shoe body (12) is powdered with talc or the like.

## Revendications

1. Bloc coulissant pour toits ouvrants, toits ouvrants relevables et analogues, avec un corps de bloc coulissant (12) en caoutchouc, qui est guidé de façon à pouvoir être accroché sur un support de bloc coulissant (14) et à pouvoir coulisser à l'état monté dans un guide longitudinal présentant sensiblement une forme de U qui en coupe transversale, bloc coulissant caractérisé en ce que l'on pose sur le corps de bloc coulissant fabriqué en caoutchouc mou, une chape de glissement (16, 16') en matière plastique.

2. Bloc coulissant selon la revendication 1, caractérisé en ce que la chape de glissement (16, 16') enveloppe le corps de bloc coulissant (12) jusque sur le côté (15) de l'accrochage.

3. Bloc coulissant selon la revendication 1 ou 2, caractérise en ce que la chape de glissement (16') est fermée de tous les côtés y compris le côté de l'accrochage (15).

4. Bloc coulissant selon la revendication 1 ou 2, caractérise en ce que la chape de glissement (16) est fendue sur la face frontale (17) située en regard du côté de l'accrochage (15).

5. Bloc coulissant selon la revendication 4, caractérisé en ce que la fente est constituée comme une fente longitudinale (18) qui s'étend sur la plus grande partie de la dimension longitudinale de la chape de glissement (16).

6. Bloc coulissant selon la revendication 5, caractérisé en ce que la fente longitudinale (18) est à la même distance, au moins approximativement des deux côtés longitudinaux (19, 20) de la chape de glissement (16).

7. Bloc coulissant selon l'une des revendications précédentes, caractérisé en ce que le corps de bloc coulissant (12) et la chape de glissement (16, 16') sont constitués en forme de ponton sur la vue de côté.

8. Bloc coulissant selon l'une des revendications précédentes, caractérisé en ce que la chape de glissement (16, 16') fait saillie, sur le côté de l'accrochage (15), d'une quantité prédéterminée au-dessus du corps de bloc coulissant (12).

9. Bloc coulissant selon l'une des revendications précédentes, caractérisé en ce que la chape de glissement (16, 16') porte sur la face intérieure d'au moins l'un des deux côtés longitudinaux (19, 20) au moins une came d'encliquetage (22, 23) faisant saillie vers l'intérieur et qui s'introduit dans une ouverture d'encliquetage correspondante (24) du corps de bloc coulissant (12).

10. Bloc coulissant selon la revendication 9, caractérisé en ce que la chape de glissement (16, 16') porte une came d'encliquetage (22, 23), sur la face intérieure des deux côtés longitudinaux (19, 20) et en ce que le corps de bloc coulissant (12) est pourvu d'une ouverture d'encliquetage (24) qui le traverse pour recevoir les deux cames d'encliquetage se faisant vis-à-vis l'une l'autre.

11. Bloc coulissant selon l'une des revendications précédentes, caractérisé en ce que le corps de bloc coulissant (12) a une dureté Shore-A de 30 à 50, et de préférence d'environ 40.

12. Bloc coulissant selon l'une des revendications précédentes, caractérisé en ce que la chape de glissement (16, 16') a une dureté Shore-A de 60 à 80, et de préférence d'environ 70.

13. Bloc coulissant selon l'une des revendications précédentes, caractérisé en ce que le corps de bloc coulissant (12) est fabriqué en caoutchouc polychloroprène.

14. Bloc coulissant selon l'une des revendications précédentes, caractérisé en ce que la chape de glissement (16, 16') est fabriquée en un polyéthylène à haute densité (HDPE), un polypropylène isotactique ou modifié par un élastomère, un copolymère acétal sur la base de trioxane ou de polyxyméthylène avec une addition de polytétrafluoréthylène.

15. Bloc coulissant selon l'une des revendications précédentes, caractérisé en ce que le corps de bloc coulissant (12) est poudré avec du talc ou analogue.
